# EUROPEAN PATENT APPLICATION

(11) **EP 4 778 382 A1**
(43) Date of publication of application: **22.07.2026**
(21) Application number: 25152529.1
(22) Date of filing: 17.01.2025
(51) Int. Cl.: A01D 75/18, G01M 13/045

(54) **STRAW CHOPPER KNIFE WEAR DETECTION**

(71) Applicant: CNH Industrial Belgium N.V., 8210 Zedelgem (BE); CNH Industrial America LLC, New Holland, PA 17557 (US)
(72) Inventor: Devos, Steven, 8210 Zedelgem (BE); Missotten, Bart M.A., 8210 Zedelgem (BE); Jongmans, Dré W.J., 8210 Zedelgem (BE); Isaac, Nathan E., New Holland, 17557 (US); Desmet, Stefaan, 8210 Zedelgem (BE); Van Campenhout, Simon, 8210 Zedelgem (BE)
(74) Representative: CNH Industrial IP Department

(57) **Abstract**

There is provided a crop processing unit for an agricultural machine (10), the crop processing unit comprising a horizontal shaft (120), a plurality of processing elements (130), an opposing element (140), a first vibration sensor (210), and a controller (230). The horizontal shaft (120) is supported by a first and a second bearing for rotation around a rotational axis. The processing elements (130) are mounted to the horizontal shaft (120) for rotation therewith and configured to rotate past the opposing element (140) for cooperation therewith. The first vibration sensor (210) is positioned at the first bearing and configured to provide a first vibration signal. The controller (230) is configured to receive the first vibration signal and to determine a condition of the processing elements (130) based on the first vibration signal.

## Description

### TECHNICAL FIELD

The present invention relates to a crop processing unit for an agricultural machine. The crop processing unit comprises a horizontal shaft, a plurality of processing elements, and an opposing element. The horizontal shaft is supported by a first and a second bearing for rotation around a rotational axis. The processing elements are mounted to the horizontal shaft for rotation therewith and configured to rotate past the opposing element for cooperation therewith. The invention further relates to an agricultural machine comprising such a crop processing unit. In specific embodiments, the crop processing unit may, for example, be a straw chopper or a weed seed destroyer.

### BACKGROUND

Many agricultural harvesters are designed to harvest crops and leave some or all of the harvested crop behind on the field. In a combine harvester, for example, the harvested crop is threshed to separate the grain therefrom, and the remaining straw is transported to the rear of the combine harvester for release on the field. The release of straw residue behind the combine harvester may be done by dropping the straw in a swath on the field, for example to allow it being picked up by a baler machine later. Often, however, the straw residue is chopped into smaller pieces by a straw chopper and spread over the field by a spreader system.

A typical design for such a straw chopper uses a rotating shaft or drum with a plurality of knives extending radially therefrom. The shaft or drum is at least partly located inside a chopper housing and oriented at least approximately in parallel with the field and perpendicular to the driving direction of the harvester. The unchopped straw is received at an inlet of the chopper housing that is typically located at the top and/or front end of the chopper housing. Chopped straw is released from an outlet of the chopper housing that is typically located more to the bottom and/or rear end of the chopper housing. In use the knives rotate around the rotational axis of the shaft or drum at high speed. Counter knives are usually positioned adjacent the chopper housing outlet, such that the straw is chopped between a rotating knife and a stationary counter knife. When a plurality of knives are provided along the width of the straw chopper, the straw is chopped into many smaller pieces before it leaves the chopper housing.

Over time, the blades of the chopper knives and counter knife will start to show signs of wear. When they lose their sharpness, the power needed to cut through the straw increases. As a result, the harvester's fuel consumption increases, less power is available for other power consuming processes of the harvester, or the harvester needs to slow down. Consequently, there is a strong desire to keep the knives and the counter knife in optimal condition and to take appropriate action when (or before) knife wear starts to reduce chopping quality or increase fuel consumption. Conventionally, knife wear is monitored by visual inspection of the knives, which brings the disadvantage of having to rely on the user's diligence and ability to reliably assess the wear status of the knives by visual inspection.

It is an aim of the present invention to address one or more disadvantages associated with the prior art.

### SUMMARY OF THE INVENTION

According to an aspect of the invention there is provided a crop processing unit for an agricultural machine, the crop processing unit comprising a horizontal shaft, a plurality of processing elements, an opposing element, a first vibration sensor, and a controller. The horizontal shaft is supported by a first and a second bearing for rotation around a rotational axis. The processing elements are mounted to the horizontal shaft for rotation therewith and configured to rotate past the opposing element for cooperation therewith. The first vibration sensor is positioned at the first bearing and configured to provide a first vibration signal. The controller is configured to receive the first vibration signal and to determine a condition of the processing elements based on the first vibration signal.

During operation of the crop processing unit, wear, breakage, or other damage to the processing elements, may lead to small deformations of the processing element geometry, or the removal of tiny or larger portions of the processing element material. The resulting changes in geometry may cause changes in the vibration pattern that are observable by the first vibration sensor. Positioning the vibration sensor at the first bearing enables detection of increased or altered vibrations, which in turn, allows for the determination of the condition of the processing elements. Determining the condition, or any changes in condition, of the processing elements is important, as these changes may result in decreased efficiency of the crop processing unit. Early detection and/or accurate assessment of the wear of and damage to the processing elements makes it easier for the user to replace or repair such elements when needed.

Different processing elements are located at different distances from the first vibration sensor. Accordingly, the observed changes in the vibration signal may not just provide a general indication of an average wear of and damage to the full collection of processing elements, but also an indication of more particular damage to, or even breakage of, one or more of the processing elements at specific locations along the length of the shaft.

In a preferred embodiment, the crop processing unit further comprises a second vibration sensor positioned at the second bearing and configured to provide a second vibration signal, and the controller is configured to receive the second vibration signal, and to determine the condition of the processing elements based on the first vibration signal and the second vibration signal.

Including this second vibration sensor may help the controller to determine a position on the shaft where the processing element responsible for the vibrational changes is located. Geometric changes to a processing element (due to wear or breakage, for example) may result in an imbalance, which leads to increased reaction forces at the side of the shaft closest to the damaged or worn processing element. With two vibration sensors, installed at opposite ends of the horizontal shaft, such imbalances can be detected and localised more accurately.

The controller may be configured to determine the condition of the processing elements based on at least a deviation of the first vibration signal from a reference vibration signal. This reference signal may represent a vibration signal as recorded when all processing elements were brand new. Large deviations from such a reference vibration signal indicates increased wear or damage to the processing elements.

Preferably, the vibration sensors are positioned to measure vibrations in a direction perpendicular to the shaft.

In some embodiments the controller is configured to determine the condition of the processing elements using the vibration signals and a machine learning algorithm. Machine learning algorithms can comprise artificial intelligence, neural networks, support vector machines, decision trees, nearest neighbors, ... Using a machine learning algorithm means that the controller learns trends and patterns in the vibration signals, and thus over time the controller will be able to distinguish noise in the vibration signal from genuine anomalies that may indicate wear or damage of one or more of the processing elements. With such knowledge, the controller can derive a condition of the processing elements from the observed vibration signals more accurately.

The machine learning algorithms may, for example, be trained using large amounts of vibration signal recordings, preferably obtained by the same or identical vibration sensors during previous harvesting sessions. During or after those harvesting sessions, experienced users, capable of judging the condition of the processing elements based on direct observation or inspection of camera images of the processing elements, may classify or assign values to the respective processing element conditions. The machine learning algorithms may then correlate the processing element conditions to the respectively recorded vibration signals. Instead of, or in addition to, using properly experienced users for assessing the processing element conditions for training the machine learning algorithms, the processing element conditions may be determined from image data using classic image recognition techniques and/or Al based image recognition techniques.]

The controller may further be configured to provide a notification based on the condition of the processing elements. The notification may warn the user that the one or more processing element need to be replaced for more efficient operation of the crop processing unit. A more urgent notification may be given when the breakage of one of the processing elements is detected to allow the user to stop the machine and inspect the crop processing unit for any lose parts that could damage the crop processing unit or other parts of the machine.

The controller may also be configured to adjust an operation of the crop processing unit based on the condition of the processing elements. For example, a rotational speed of the shaft may be increased to compensate for a reduced efficacy caused by wear of the crop processing elements.

The processing elements may, for example comprise knives, with the opposing element comprising one or more counter knives, as in a straw chopper. In other embodiments, the processing elements may be seed hammers, and the opposing element may be a housing positioned to allow the seed hammers to crush seeds between the seed hammers and the housing, as in a weed seed destroyer.

In another aspect of the invention there is provided an agricultural machine comprising the crop processing unit according to the invention. The agricultural machine may, for example, be a combine harvester.

### BRIEF DESCRIPTION OF THE DRAWINGS

Embodiments of the invention will now be described by way of example with reference to the accompanying drawings, in which:
Figure 1 schematically shows a combine harvester wherein the invention may be advantageously used.
Figure 2 schematically shows a straw chopper according to an embodiment of the invention and suitable for use in the combine harvester of Figure 1.

### DETAILED DESCRIPTION

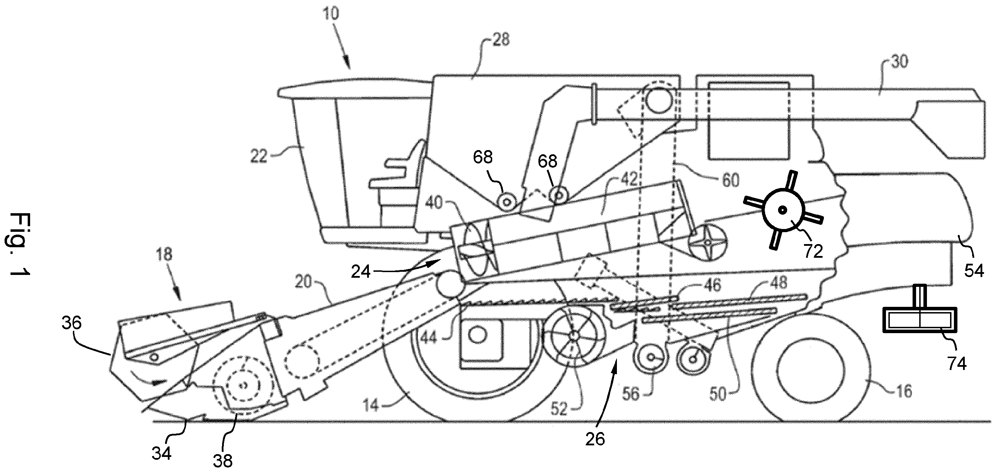

Figure 1 schematically shows an agricultural harvester in the form of a combine harvester 10. A combine harvester 10 as shown in Figure 1 generally includes front and rear ground engaging wheels 14, 16, a header 18, a feeder 20, an operator cabin 22, a threshing and separation system 24, a cleaning system 26, a grain tank 28 and an unloading tube 30.

The header 18 is mounted to the front of the combine harvester 10 and includes a cutter bar 34 for severing crops from a field during forward motion of the harvester 10. A single or multi-segment rotatable reel 36 feeds the crop into the header 18, and an intake auger 38 feeds the severed crop laterally from each side towards the feeder 20. The feeder 20 conveys the severed crop to the threshing and separation system 24.

The threshing and separation system 24 is of the axial-flow type and comprises a threshing rotor 40 at least partially located and rotatable within a threshing concave 42. The threshing concave may take the form of a perforated concave. Grain from the severed crop is threshed and separated from the material other than grain (MOG) by the action of the threshing rotor 40 within the threshing concave 42. Larger elements of MOG, such as stalks and leaves do not pass through the perforations in the threshing concave 42 and are discharged from the rear of the combine harvester 10.

The release of straw residue behind the combine harvester 10 may be done by dropping the straw in a swath on the field, for example to allow it being picked up by a baler machine later. Often, however, the straw residue is chopped into smaller pieces by a straw chopper 72 and spread over the field across the full width of the header 18 by a spreader system 74. The spreader system 74 typically comprises a left and a right rotary spreader, each spreading the chopped crop residue received from the straw chopper 72 laterally and away from the combine harvester 10. The chaff and other small MOG coming from the cleaning system 26 may be dropped on the field, spread over the field by a separate chaff spreader (not shown), or mixed in with the straw residue to be spread together therewith by the spreader system 74. The straw, chaff, and other MOG that is spread over the field serves as fertilizer for the soil.

Grain and smaller elements of MOG (small MOG henceforth), such as chaff, dust and straw are small enough to pass through the perforations in the threshing concave 42. Grain and small MOG that has successfully passed the threshing and separation system 24 falls onto a preparation pan 44 and is conveyed towards the cleaning system 26. The cleaning system comprises a series of sieves and a cleaning fan 52. The series of sieves includes a pre-cleaning sieve 46, an upper (or chaffer) sieve 48 and a lower (or shoe) sieve 50. The cleaning fan 52 generates an airflow through the sieves 46, 48, 50 that impinges on the grain and small MOG thereon. The small MOG is typically lighter than the grain and is therefore separated from the grain as it becomes airborne. The small MOG is subsequently discharged from the combine harvester 10 via a straw hood 54.

The preparation pan 44 and pre-cleaning sieve 46 oscillate in a fore-to-aft manner to transport the grain and small MOG to the upper surface of the upper sieve 48. The upper sieve 48 is arranged vertically above the lower sieve 50 and oscillates in a for-to-aft manner too, such that the grain and small MOG are spread across the two sieves 48, 50, while also permitting cleaned grain to pass through openings in the sieves 48, 50 under the action of gravity.

Cleaned grain falls to a clean grain auger 56 that is positioned below and in front of the lower sieve 50 and spans the width of the combine harvester 10. The clean grain auger 56 conveys the cleaned grain laterally to a vertical grain elevator 60, which is arranged to transport the cleaned grain to the grain tank 28. Once in the grain tank 28, grain tank augers 68 at the bottom of the grain tank convey the cleaned grain laterally within the grain tank 28 to an unloading tube 30 for discharge from the combine harvester 10.

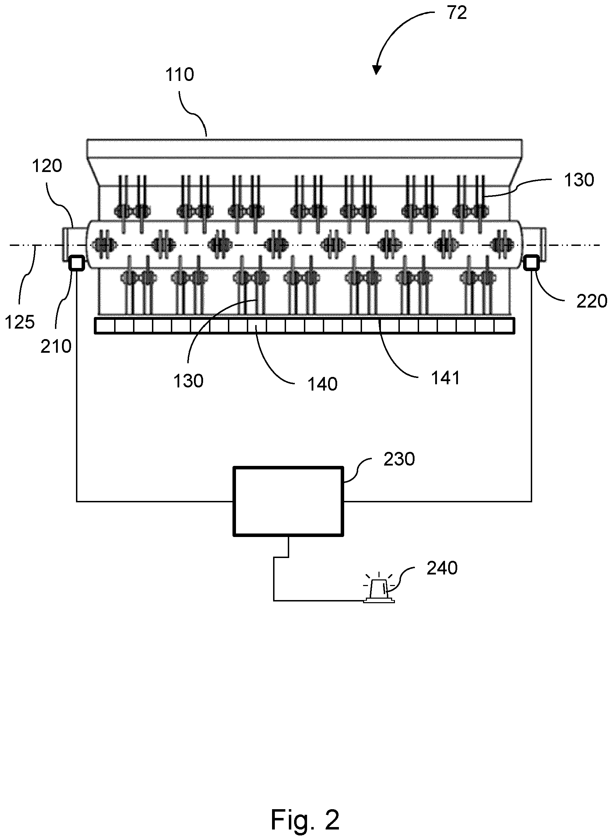

Figure 2 schematically shows a straw chopper 72 according to an embodiment of the invention and suitable for use in the combine harvester 10 of Figure 1. The straw chopper 72 comprises a chopper housing 110, a rotational axle 120 carrying a plurality of knives 130, and a counter knife 140. The chopper housing 110 comprises an inlet for receiving unchopped straw and an outlet for releasing chopped straw. The rotational axle 120 is mounted to the chopper housing 110 or some other part of the combine harvester 10 for rotation around a chopper axis 125. The knives 130 extend radially from the rotational axle 120 and are configured for rotating therewith. The knives 130 and the counter knife 140 are configured to cooperatively exert a chopping action on the received straw. The counter knife 140 is typically provided as a bar comprising a plurality of parallel counter knives 141 or counter knife blades 141, positioned such that, during use, the chopper knives 130 on the rotational axle 120 move through gaps between two adjacent counter knife blades 141. In some embodiments, two or more counter knife bars 140 may be provided for providing increased cutting action.

Although not shown in Figure 1, an agricultural machine (for example, the combine harvester 10 of Figure 1) may also comprise a weed seed destroyer. Many weeds found in crops have a similar life cycle to the crops. Therefore, when a crop is harvested, many weeds may still have viable seeds that remain on the crop above the cutting height, which enter the agricultural machine during harvesting alongside the crops. The seeds may end up in a grain tank, out with straw residues, or out with chaff residues. Some agricultural machines comprise a processing unit that destroys the weed seeds. One method uses a hammer mill to destroy the weed seeds. A hammer mill uses a rotor with impact elements (hammers) to pulverise material. This configuration is known as a weed seed destroyer. A weed seed destroyer may have a somewhat similar structure to the straw chopper 72 shown in Figure 2, and operates in a similar way. The weed seed destroyer also comprises a housing arranged around a shaft. A plurality of hammers (flails) are mounted on the shaft. The hammers extend radially from the shaft and are configured to rotate as the shaft rotates. The hammers and the housing are positioned to allow the hammers to crush seeds between the hammers and the housing as the shaft rotates.

Both the straw chopper 72 and the weed seed destroyer comprise elements (knives or flail knives 130, hammers) that may be susceptible to wear and or breakage during operation.

Therefore, it has been recognised that a system for determining the condition of these elements during use is desirable, in order to ensure the agricultural machine 10 is operating efficiently.

The straw chopper 72 of Figure 2 further comprises a first vibration sensor 210 and a second vibration sensor 220, respectively positioned at the first bearing and second bearing of the horizontal shaft 120, and configured to respectively provide first and second vibration signals. A controller 230 is coupled to the vibration sensors 210, 220 and configured to receive and process the vibration signals to determine a condition of the knives 130 based on the vibration signals. It is noted that in other embodiments, just a single vibration sensor may be used and that the one or more vibration sensors 210, 220 may be positioned at a more centrally located bearing.

During operation of the straw chopper 72, wear, breakage, or other damage to the knives 130, may lead to small deformations of the knife geometry, or the removal of tiny or larger portions of the knife blade material. The resulting changes in geometry may cause changes in the vibration pattern that are observable by the first and second vibration sensors 210, 220. The types of knives 130 and the mounting of the knives 130 on the shaft 120 may also cause changes in the vibration pattern measured by the sensors 210, 220 (discussed later). Positioning the vibration sensors 210, 220 at the bearings enables detection of increased or altered vibrations, which in turn, allows for the determination of the condition of the knives 130. Determining the condition, or any changes in condition, of the knives is important, as these changes may result in decreased efficiency of the straw chopper 72. Early detection and/or accurate assessment of the wear of and damage to the straw chopper 72 makes it easier for the user to replace or repair them when needed.

As shown in Figure 2, the knives 130 are spaced apart at different distances along the shaft, i.e., at different distances from the first bearing and thus the first and second vibration sensors 210, 212. Accordingly, the observed changes in the vibration signal may not just provide a general indication of an average wear of and damage to the full collection of knives 130, but also an indication of more particular damage to, or even breakage of, one or more of the knives 130 at specific locations along the length of the shaft 120.

The vibration sensors 210, 220 may be positioned to measure vibrations in a direction perpendicular to the shaft 120. Additionally, as the vibration sensors 210, 220 are mounted at or on the bearings, they may also measure bearing vibration (in addition to shaft vibration). Bearing degradation and failure can be determined using the measured vibration signals. Therefore, the straw chopper 72 may also be configured to monitor bearing health.

In some embodiments, the monitored condition is an imbalance in the straw chopper 72, weed seed destroyer, or other types of crop processing units. A perceived imbalance may be caused by a variance in vibration along the shaft 120. Such an imbalance may negatively affect operation of the crop processing unit, and it is therefore beneficial to detect imbalances early. While an imbalance can be a result of geometric changes to a processing element 130 (such as wear or damage), other factors may also cause an imbalance on the shaft 120. An imbalance may, for example, be caused by improper mounting of the processing element 130 on the shaft 120, by uneven bearing wear, by mounting different processing element types along the length of the shaft 120, or by mounting processing elements from different batches on the shaft 120. The imbalances caused by any of such changes cause increased reaction forces and thus increased vibrations. The increase in vibration is detected by the first sensor 210, the second sensor 220, or both.

The condition (wear, damage, imbalances) of the knives 130 or other processing elements is determined using the vibration signal, and various methods may be used to do so.

In some embodiments, the controller 230 may be configured to determine the condition of the processing elements 130 based on at least a deviation of each individual vibration signal from a reference vibration signal. The reference vibration signal may be a vibration signal produced when the crop processing unit and all processing elements are brand new (and thus in perfect condition). Large deviations from such a reference vibration signal indicates increased wear or damage to the processing elements 130. The greater the deviation from the reference vibration signal, the greater the wear or imbalance that may be present.

In some embodiments, the controller 230 is configured to determine the condition of the processing elements 130 using at least the vibration signals and a machine learning algorithm. In other words, the vibration signals may be received by the machine learning algorithm, which then identifies (classifies) the condition of the processing elements 130.

The skilled person will be familiar with machine learning and machine learning algorithms (models), and will appreciate that a wide range of different algorithms may be used to determine the condition based on the measured vibration signal. The machine learning model may comprise a set of rules or (mathematical) functions that are used to perform a task related to data input into the algorithm. For example, a neural network may be trained to receive a vibration signal as input, to isolate the vibration signal from noise, and to classify the vibration signal as a particular condition (e.g., acceptable, worn, broken). Support vector machines, decision trees, and nearest neighbour searches are further examples of machine learning algorithms that may be used to determine the condition of the processing elements 130.

The machine learning algorithms may, for example, be trained using large amounts of vibration signal recordings, preferably obtained by the same or identical vibration sensors during previous harvesting sessions. During or after those harvesting sessions, experienced users, capable of judging the condition of the processing elements based on direct observation or inspection of camera images of the processing elements, may classify or assign values to the respective processing element conditions. The machine learning algorithms may then correlate the processing element conditions to the respectively recorded vibration signals. Instead of, or in addition to, using properly experienced users for assessing the processing element conditions for training the machine learning algorithms, the processing element conditions may be determined from image data using classic image recognition techniques and/or Al based image recognition techniques.

Using a machine learning algorithm to determine the condition means that the controller 230 learns trends and patterns in the vibration signals, and thus over time the controller 230 will be able to distinguish noise in the vibration signal from genuine anomalies that may indicate wear or damage of one or more of the processing elements 130. With such knowledge, the controller 230 can derive a condition of the processing elements 130 from the observed vibration signals more accurately.

In some embodiments, the controller 230 is further configured to provide a notification based on the determined condition of the knives 130 or other processing elements. In other words, if the processing elements 130 are found to be in a certain condition (e.g., beyond a threshold level of wear, or that there is a broken processing element), an indication may be provided. The notification may be in the form of a pop-up on a connected display screen, a flashing light, or an alarm 240. The notification may warn the user that the one or more processing elements 130 need to be replaced for more efficient operation of the crop processing unit. A more urgent notification may be given when the breakage of one of the processing elements is detected to allow the user to stop the machine and inspect the crop processing unit for any loose parts that could damage the crop processing unit or other parts of the machine.

The controller 230 may also be configured to adjust an operation of the crop processing unit based on the condition of the processing elements 130. For example, a rotational speed of the shaft 120 may be increased to compensate for a reduced efficacy caused by wear of the crop processing elements 130.

In embodiments two or more vibration sensors 210, 220, the controller 230 may be further configured to determine a location on the shaft 120 of a worn or broken processing element based on a combination of the vibration signals from multiple vibrations sensors 210, 220, located at different positions along the rotary shaft 120. In other words, including the second vibration sensor 220 may help the controller 230 to determine a location on the shaft 120 where the processing element 130 responsible for the vibrational changes is located. As described, geometric changes to a processing element (due to wear or breakage, for example) may result in an imbalance, which leads to increased reaction forces at the side of the shaft closest to the damaged or worn processing element 130. Similarly, an incorrectly mounted processing element or the inclusion of a processing element of a different batch also leads to an imbalance, which alters the reaction forces at the side of the shaft closest to that processing element. With two vibration sensors 210, 220, installed at opposite ends of the horizontal shaft 120, such imbalances can be detected and localised more accurately. Imbalances may, for example, be detected using rotational frequencies in the vibration signal measured by the sensors 210, 220, in the order of 10-100Hz. In general, any anomaly in the vibrations signal will be most visible in the sensor signal coming from the vibration sensor 210, 220 that is closest to the anomaly.

It is noted that the same invention may be used in other types of agricultural harvesters with a similar chopper arrangement. For example, the grass pick up of a baler, a silage wagon, or a grass header for a forage harvester may be constructed similarly with a plurality of knives extending radially from a rotational axle and a counter knife being configured to, cooperatively with the plurality of knives, exert a chopping action on the received crop (grass or straw).

## Claims

1. A crop processing unit for an agricultural machine (10), the crop processing unit comprising:
a horizontal shaft (120), supported by a first bearing and a second bearing for rotation around a rotational axis (125),
a plurality of processing elements (130), mounted to the horizontal shaft (120) for rotation therewith;
an opposing element (140), wherein the processing elements (130) are configured to rotate past the opposing element (140) for cooperation therewith;
a first vibration sensor (210) positioned at the first bearing and configured to provide a first vibration signal; and
a controller (230) configured to receive the first vibration signal and to determine a condition of the processing elements (130) based on the first vibration signal.

2. The crop processing unit of claim 1, further comprising a second vibration sensor (220) positioned at the second bearing and configured to provide a second vibration signal, wherein the controller (230) is configured to receive the second vibration signal, and to determine the condition of the processing elements (130) based on the first vibration signal and the second vibration signal.

3. The crop processing unit of any preceding claim, wherein the controller (230) is configured to determine the condition of the processing elements (130) using at least the first vibration signal and a machine learning algorithm.

4. The crop processing unit of any preceding claim, wherein the controller (230) is configured to determine the condition of the processing elements (130) based on at least a deviation of the first vibration signal from a reference vibration signal.

5. The crop processing unit of any preceding claim wherein the first vibration sensor (210) is positioned to measure vibrations in a direction perpendicular to the shaft (120).

6. The crop processing unit of any preceding claim, wherein the condition is a wear condition or a presence of a broken processing element in the plurality of processing elements.

7. The crop processing unit of any preceding claim, wherein the condition is an imbalance in the crop processing unit.

8. The crop processing unit of claim 6 or 7, when dependent on any of claims 2 to 5, wherein the controller (230) is further configured to determine a location on the shaft (120) of a worn or broken processing element based on the first vibration signal and the second vibration signal.

9. The crop processing unit of any preceding claim, wherein the controller (230) is further configured to provide a notification based on the condition of the processing elements (130).

10. The crop processing unit of any preceding claim, wherein the controller (230) is further configured to adjust an operation of the crop processing unit based on the condition of the processing elements (130).

11. The crop processing unit of any preceding claim, wherein the processing elements (130) comprise knives, and the opposing element (140) comprises one or more counter knives.

12. The crop processing unit of any preceding claim wherein the controller (230) is further configured to determine a condition of the first bearing based on the first vibration signal.

13. The crop processing unit of any proceeding claim wherein the crop processing unit is a straw chopper (72) or a weed seed destroyer.

14. An agricultural machine comprising the crop processing unit of any preceding claim.

15. An agricultural machine according to claim 14, wherein the agricultural machine is a combine harvester (10).
